# NEUE EUROPÄISCHE PATENTSCHRIFT

(11) **EP 3 844 039 B2**
(45) Veröffentlichungstag und Bekanntmachung des Hinweises auf die Entscheidung über den Einspruch: **27.05.2026**
(45) Hinweis auf die Patenterteilung: 30.11.2022
(21) Anmeldenummer: 19755817.4
(22) Anmeldetag: 25.07.2019
(51) Int. Cl.: B60T 7/04, B60T 7/20, B60T 13/66, B60T 13/26

(54) **VERFAHREN, STEUERGERÄT UND STEUERSYSTEM ZUM STEUERN EINES FESTSTELLBREMSSYSTEMS FÜR EIN FAHRZEUGGESPANN MIT EINEM ZUGFAHRZEUG UND EINEM ANHÄNGER**
METHOD, CONTROL DEVICE AND CONTROL SYSTEM FOR CONTROLLING A PARKING BRAKE SYSTEM FOR A TRACTOR-TRAILER COMBINATION
PROCÉDÉ, APPAREIL DE CONTRÔLE ET SYSTÈME DE CONTRÔLE POUR CONTRÔLER UN SYSTÈME DE FREIN DE STATIONNEMENT POUR UNE COMBINAISON DE VÉHICULE TRACTEUR ET REMORQUE

(30) Priorität: 31.08.2018 DE 102018121311
(43) Veröffentlichungstag der Anmeldung: 07.07.2021
(73) Patentinhaber: KNORR-BREMSE Systeme für Nutzfahrzeuge GmbH, 80809 München (DE)
(72) Erfinder: REICHERT, Matthias, 71282 Hemmingen (DE); WEILAND, Robert, 70839 Gerlingen (DE)
(74) Vertreter: Aurigium Leischner & Luthe
(86) Internationale Anmeldenummer: PCT/EP2019/070126
(87) Internationale Veröffentlichungsnummer: WO 2020/043402

(56) Entgegenhaltungen:
- EP-A1- 2 199 162
- EP-A1- 2 615 003
- DE-A1- 10 336 611
- DE-A1- 102007 008 504
- DE-A1- 102008 064 077
- DE-A1- 102015 112 490
- DE-A1- 2 452 299

## Beschreibung

Die vorliegende Erfindung bezieht sich auf ein Verfahren zum Steuern eines Feststellbremssystems für ein Fahrzeuggespann mit einem Zugfahrzeug und einem Anhänger, auf ein entsprechendes Steuergerät und auf ein entsprechendes Steuersystem.

Ein solches Verfahren ist aus EP 2615003 A1 bekannt.

Für Fahrzeuge und Fahrzeuggespanne mit Zugfahrzeug und Anhänger kann eine elektronische Parkbremse (EPB) für unterschiedliche Länder oder Regionen in unterschiedlichen Varianten ausgeführt sein. Beispielsweise kann in einer ersten Variante ein Anhänger mittels der Parkbremse standardmäßig gebremst sein, kann in einer zweiten Variante ein Anhänger mittels der Parkbremse standardmäßig ungebremst sein oder kann in einer dritten Variante kein Anhänger vorhanden sein. Eine Bedieneinrichtung der Parkbremse kann hierzu für jede Variante ein unterschiedliches Gehäuse oder Gehäuseoberteil erfordern.

Vor diesem Hintergrund ist es die Aufgabe der vorliegenden Erfindung, ein verbessertes Verfahren zum Steuern eines Feststellbremssystems für ein Fahrzeuggespann mit einem Zugfahrzeug und einem Anhänger, ein verbessertes Steuergerät und ein verbessertes Steuersystem zum Steuern eines Feststellbremssystems für ein Fahrzeuggespann mit einem Zugfahrzeug und einem Anhänger zu schaffen.

Diese Aufgabe wird durch ein Verfahren zum Steuern eines Feststellbremssystems für ein Fahrzeuggespann mit einem Zugfahrzeug und einem Anhänger, durch ein Steuergerät, durch ein entsprechendes Steuersystem zum Steuern eines Feststellbremssystems für ein Fahrzeuggespann mit einem Zugfahrzeug und einem Anhänger und durch ein entsprechendes Computerprogramm gemäß den Hauptansprüchen gelöst.

Gemäß Ausführungsformen kann insbesondere eine Funktionalität einer Variante einer elektronischen Parkbremse für ungebremsten Anhänger mittels einer Softwarefunktion einer Variante der elektronischen Parkbremse für gebremsten Anhänger realisiert werden und somit eine gemeinsam für beide Varianten nutzbare Hardware bereitgestellt werden. Beispielsweise können in Skandinavien Anhänger in Parkstellung ungebremst sein, um Anhänger bei einem Ladevorgang vor mechanischer Verspannung zu schützen. Gemäß Ausführungsformen kann insbesondere mittels einer Software-Lösung dieselbe Funktionalität auch unter Verwendung der gebremsten bzw. kontinentaleuropäischen Variante hardwareseitig und softwareseitig realisiert werden.

Vorteilhafterweise kann gemäß Ausführungsformen insbesondere eine Hardware-Ausführung zum Ansteuern einer elektronischen Parkbremse vordem Hintergrund verschiedener Länder-Varianten bzw. regionalen Varianten vereinfacht werden. Hierbei können beispielsweise Hardware-Varianten eingespart werden. Es können zum Darstellen von drei Varianten der elektronischen Parkbremse herkömmlicherweise zum Beispiel drei unterschiedliche Hardware-Teile, insbesondere Gehäuseteile wie Gehäuseoberteile, einer Ventilbaugruppe oder eines Steuersystems vorgesehen sein, wobei in einer ersten Variante ein Anhänger mittels der Parkbremse standardmäßig gebremst sein kann, in einer zweiten Variante ein Anhänger mittels der Parkbremse standardmäßig ungebremst sein kann und in einer dritten Variante kein Anhänger vorhanden sein kann. Durch das Realisieren zweier Varianten mittels einer gemeinsamen Hardware-Lösung bzw. das Realisieren der Eigenschaften bzw. Funktionalität einer Variante über eine Softwarefunktion, kann die zugehörige Hardware-Variante entfallen. Dies führt zu reduziertem Handhabungsaufwand und zu verringerten Werkzeugkosten.

Ein Verfahren zum Steuern eines Feststellbremssystems für ein Fahrzeuggespann mit einem Zugfahrzeug und einem Anhänger weist folgende Schritte auf:
Einlesen eines Feststellsignals;
Bereitstellen eines Betätigungssignals ansprechend auf das Feststellsignal an eine Ventilbaugruppe, um eine Zugfahrzeug-Feststellbremse und eine Anhänger-Betriebsbremse in einen betätigten Zustand zu versetzen;
Einlesen eines Anhängerfreigabesignals; und
Bereitstellen eines Lösesignals ansprechend auf das Anhängerfreigabesignal an die Ventilbaugruppe, um die Anhänger-Betriebsbremse von dem betätigten Zustand in einen unbetätigten Zustand zu versetzen, wobei die Zugfahrzeug-Feststellbremse in dem betätigten Zustand belassen wird.

Das Verfahren kann bzw. die Schritte des Verfahrens können unter Verwendung eines Steuergeräts und zusätzlich oder alternativ eines Steuersystems zum Steuern des Feststellbremssystems ausgeführt werden. Bei dem Zugfahrzeug kann es sich um ein Nutzfahrzeug handeln, wie beispielsweise einen Lastkraftwagen oder dergleichen. Das Feststellbremssystem kann mindestens eine Zugfahrzeug-Feststellbremse, mindestens eine Anhänger-Betriebsbremse und ein Steuersystem aufweisen. Die mindestens eine Zugfahrzeug-Feststellbremse kann in dem Zugfahrzeug angeordnet sein. Die mindestens eine Anhänger-Betriebsbremse kann in dem Anhänger angeordnet sein. Das Feststellsignal kann einen angeforderten mittels des Feststellbremssystems gebremsten Zustand des gesamten Fahrzeuggespanns repräsentieren. Das Anhängerfreigabesignal kann einen angeforderten ungebremsten Zustand des Anhängers bei gebremstem Zustand des Zugfahrzeugs repräsentieren. Im Schritt des Bereitstellens des Betätigungssignals kann das Betätigungssignal zur Ausgabe an die Ventilbaugruppe bereitgestellt werden. Im Schritt des Bereitstellens des Lösesignals kann das Lösesignal zur Ausgabe an die Ventilbaugruppe bereitgestellt werden. Die Ventilbaugruppe kann eine Mehrzahl von Magnetventilen, einen Drucksensor und ein Relaisventil aufweisen.

Auch wird im Schritt des Einlesens des Feststellsignals das Feststellsignal von einer Eingangsschnittstelle zu einer Bedieneinrichtung zum Bedienen des Feststellbremssystems eingelesen. Zusätzlich wird im Schritt des Einlesens des Anhängerfreigabesignals das Anhängerfreigabesignal von der Eingangsschnittstelle eingelesen. Die Eingangsschnittstelle kann Teil eines Steuergeräts zum Ausführen des Verfahrens oder Teil der Bedieneinrichtung sein oder als eine dazwischenliegende Einheit ausgeführt sein. Die Bedieneinrichtung kann einen Hebel, zumindest einen Schalter, zumindest eine Taste oder ein Bedienfeld als eine Benutzerschnittstelle aufweisen. Die Bedieneinrichtung kann von einem Führer des Fahrzeugs betätigt werden. Dies bietet den Vorteil, dass mittels einer einzigen Ausführungsvariante der Bedieneinrichtung sowohl der betätigte Zustand als auch der unbetätigte Zustand der Anhänger-Betriebsbremse realisiert bzw. angefordert werden kann.

Dabei repräsentiert das Feststellsignal eine erste Schaltstellung der Bedieneinrichtung und repräsentiert das Anhängerfreigabesignal eine zweite Schaltstellung der Bedieneinrichtung. Dies bietet den Vorteil, dass die mittels der Anhänger-Betriebsbremse gebremste Variante des Anhängers und auch die mittels der Anhänger-Betriebsbremse ungebremste Variante des Anhängers mit reduziertem Hardwareaufwand erreicht werden kann, wobei für beide Varianten eine einzige Ausführungsvariante der Ventilbaugruppe oder eines Steuersystems zum Einsatz kommt.

Das Verfahren weist auch einen Schritt des Bereitstellens eines Wiederbetätigungssignals ansprechend auf ein Anhängerrückstellsignal und optional zusätzlich ansprechend auf einen Ablauf einer vordefinierten Lösezeitdauer an die Ventilbaugruppe auf, um die Anhänger-Betriebsbremse von dem unbetätigten Zustand in den betätigten Zustand zu versetzen. Hierbei wird die Zugfahrzeug-Feststellbremse in dem betätigten Zustand belassen. Das Anhängerrückstellsignal kann einen angeforderten Wechsel von dem ungebremsten Zustand in den gebremsten Zustand des Anhängers repräsentieren. Die Lösezeitdauer kann abhängig von Sicherheitsvorschriften und zusätzlich oder alternativ anderen Vorgaben vordefiniert sein. Die Lösezeitdauer kann dabei einstellbar oder fest vorgegeben sein. Dies bietet den Vorteil, dass der Anhänger je nach situativer Anforderung auf einfache und sichere Weise von dem ungebremsten Zustand wieder in den gebremsten Zustand zurückversetzt werden kann.

Dabei weist das Verfahren zudem einen Schritt des Einlesens des Anhängerrückstellsignals auf. Es wird hierbei das Anhängerrückstellsignal von einer Eingangsschnittstelle zu einer Bedieneinrichtung zum Bedienen des Feststellbremssystems eingelesen. Auch können Ventile der Ventilbaugruppe bei Ausfall einer Spannungsversorgung im Zugfahrzeug automatisch eine Stellung einnehmen, welche durch ein Anhängerrückstellsignal bewirkt wird. Dies bietet den Vorteil, dass auch ein Wechsel von dem ungebremsten Zustand in den gebremsten Zustand des Anhängers auf einfache, zuverlässige und Hardware sparende Weise erfolgen kann.

Ferner repräsentiert dabei das Anhängerrückstellsignal eine zweite Schaltstellung der Bedieneinrichtung. Hierbei repräsentiert das Anhängerrückstellsignal ein erneutes Erreichen der zweiten Schaltstellung der Bedieneinrichtung. Dies bietet den Vorteil, dass auch der Anhänger auf sichere Weise wieder in einen gebremsten Zustand versetzt werden kann, wenn dies gewünscht ist.

Auch kann das Anhängerrückstellsignal ein Ausschalten eines Antriebsmotors oder eines Fahrschalters des Zugfahrzeugs, ein Entfernen eines Zündschlüssels des Zugfahrzeugs, ein Verlassen eines Fahrersitzes seitens eines Fahrers des Fahrzeuggespanns, einen erkannten Fehler in dem Feststellbremssystem oder in einem Steuersystem zum Steuern des Feststellbremssystems und zusätzlich oder alternativ einen Ausfall einer Spannungsversorgung des Fahrzeuggespanns repräsentieren. Eine solche Ausführungsform bietet den Vorteil, dass der Anhänger auf zuverlässige und sichere Weise wieder in den gebremsten Zustand versetzt werden kann, wenn dies erforderlich ist.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ein Steuersystem zum Steuern eines Feststellbremssystems für ein Fahrzeuggespann mit einem Zugfahrzeug und einem Anhänger weist folgende Merkmale auf:
eine Bedieneinrichtung zum Bedienen des Feststellbremssystems;
eine Ausführungsform des vorstehend genannten Steuergeräts, wobei das Steuergerät über eine Eingangsschnittstelle signalübertragungsfähig mit der Bedieneinrichtung verbunden ist;, und
eine Ventilbaugruppe zum Ansteuern einer Zugfahrzeug-Feststellbremse und einer Anhänger-Betriebsbremse des Feststellbremssystems, wobei das Steuergerät signalübertragungsfähig mit der Ventilbaugruppe verbunden ist.

Das Steuersystem kann die Bedieneinrichtung, das Steuergerät und die Ventilbaugruppe aufweisen. Auch kann das Steuersystem die Eingangsschnittstelle aufweisen.

Gemäß einer Ausführungsform kann die Ventilbaugruppe eine Mehrzahl von Magnetventilen und ein Relaisventil aufweisen. Hierbei kann die Mehrzahl von Magnetventilen zumindest ein Steuerventil aufweisen, das ausgebildet ist, um je nach Ventilstellung die Zugfahrzeug-Feststellbremse und die Anhänger-Betriebsbremse bezüglich einander gleichsinnig oder gegensinnig anzusteuern. Hierbei können die Ventile mittels Leitungen mit einem Vorrat an mit Druck beaufschlagtem Fluid sowie miteinander verbunden sein, um Leitungen zu der Zugfahrzeug-Feststellbremse und der Anhänger-Betriebsbremse zu belüften und zu entlüften. Eine solche Ausführungsform bietet den Vorteil, dass eine variantenreiche Ansteuerung der Bremsen des Zugfahrzeugs sowie des Anhängers unter Verwendung einer einfachen Ausführung der Ventilbaugruppe zuverlässig erreicht werden kann.

Dabei kann das Steuerventil ein 3/2-Wegeventil aufweisen. Alternativ kann das Steuerventil als zwei 2/2-Wegeventile ausgeführt sein. Eine solche Ausführungsform bietet den Vorteil, dass je nach gegebener Ventilvariante die gewünschte Ansteuerung der Bremsen realisiert werden kann.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung und/oder Umsetzung der Schritte des Verfahrens nach einer der vorstehend beschriebenen Ausführungsformen verwendet wird, und zwar wenn das Programmprodukt oder Programm auf einem Computer oder einer Vorrichtung ausgeführt wird.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Fahrzeuggespanns mit einem Steuersystem zum Steuern eines Feststellbremssystems gemäß einem Ausführungsbeispiel;
Fig. 2 eine schematische Darstellung eines Steuersystems zum Steuern eines Feststellbremssystems gemäß einem Ausführungsbeispiel;
Fig. 3 ein Ablaufdiagramm eines Verfahrens zum Steuern gemäß einem Ausführungsbeispiel;
Fig. 4 schematische Diagramme zu Bedienung und Funktionsweise des Feststellbremssystems aus Fig. 1 bzw. Fig. 2;
Fig. 5 schematische Diagramme zu Bedienung und Funktionsweise des Feststellbremssystems aus Fig. 1 bzw. Fig. 2;
Fig. 6 eine schematische Darstellung eines Zugfahrzeugs eines Fahrzeuggespanns mit einem Steuersystem zum Steuern eines Feststellbremssystems gemäß einem Ausführungsbeispiel;
Fig. 7 eine schematische Darstellung eines Steuersystems zum Steuern eines Feststellbremssystems gemäß einem Ausführungsbeispiel;
Fig. 8 eine schematische Darstellung eines Steuersystems zum Steuern eines Feststellbremssystems gemäß einem Ausführungsbeispiel;
Fig. 9 eine perspektivische Darstellung einer Bedieneinrichtung eines Steuersystems zum Steuern eines Feststellbremssystems gemäß einem Ausführungsbeispiel; und
Fig. 10 eine Seitenansicht der Bedieneinrichtung aus Fig. 9.

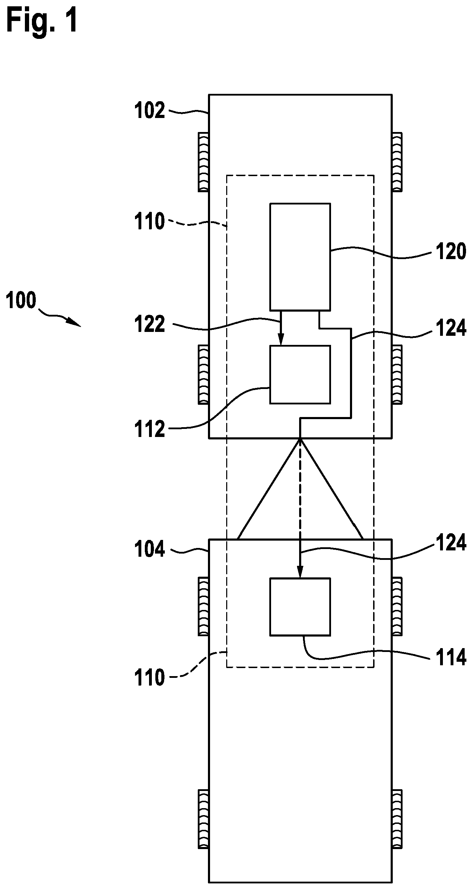

**Fig. 1** zeigt eine schematische Darstellung eines Fahrzeuggespanns 100 mit einem Steuersystem 120 zum Steuern eines Feststellbremssystems 110 gemäß einem Ausführungsbeispiel. Das Fahrzeuggespann 100 weist ein Zugfahrzeug 102 und einen Anhänger 104 auf. In der Darstellung von Fig. 1 sind das Zugfahrzeug 102 und der Anhänger 104 in einem miteinander gekoppelten Zustand gezeigt. Bei dem Zugfahrzeug 102 handelt es sich beispielsweise um einen Lastkraftwagen.

Das Feststellbremssystem 110 weist das Steuersystem 120 zum Steuern des Feststellbremssystems 110 sowie beispielhaft lediglich eine Zugfahrzeug-Feststellbremse 112 und beispielhaft lediglich eine Anhänger-Betriebsbremse 114 auf. Hierbei ist das Steuersystem 120 mittels Fluidleitungen mit der Zugfahrzeug-Feststellbremse 112 und über ein Anhängersteuermodul mit der Anhänger-Betriebsbremse 114 verbunden. Das Steuersystem 120 ist ausgebildet, um die Zugfahrzeug-Feststellbremse 112 unter Verwendung eines hydraulischen oder pneumatischen Zugfahrzeug-Steuersignals 122 anzusteuern, um die Zugfahrzeug-Feststellbremse 112 zu betätigen und zu lösen. Ferner ist das Steuersystem 120 ausgebildet, um die Anhänger-Betriebsbremse 114 unter Verwendung eines hydraulischen oder pneumatischen Anhänger-Steuersignals 124 über das Anhängersteuermodul anzusteuern, um die Anhänger-Betriebsbremse 114 zu betätigen und zu lösen. Insbesondere auf das Steuersystem 120 wird unter Bezugnahme auf nachfolgende Figuren noch detaillierter eingegangen.

Das hydraulische oder pneumatische Zugfahrzeug-Steuersignal 122 repräsentiert einen einstellbaren, zum Ansteuern der Zugfahrzeug-Feststellbremse 112 verwendeten Fluiddruck bzw. Steuerdruck. Das hydraulische oder pneumatische Anhänger-Steuersignal 124 repräsentiert einen einstellbaren, zum Ansteuern der Anhänger-Betriebsbremse 114 über das Anhängersteuermodul verwendeten Fluiddruck bzw. Anhängersteuerdruck.

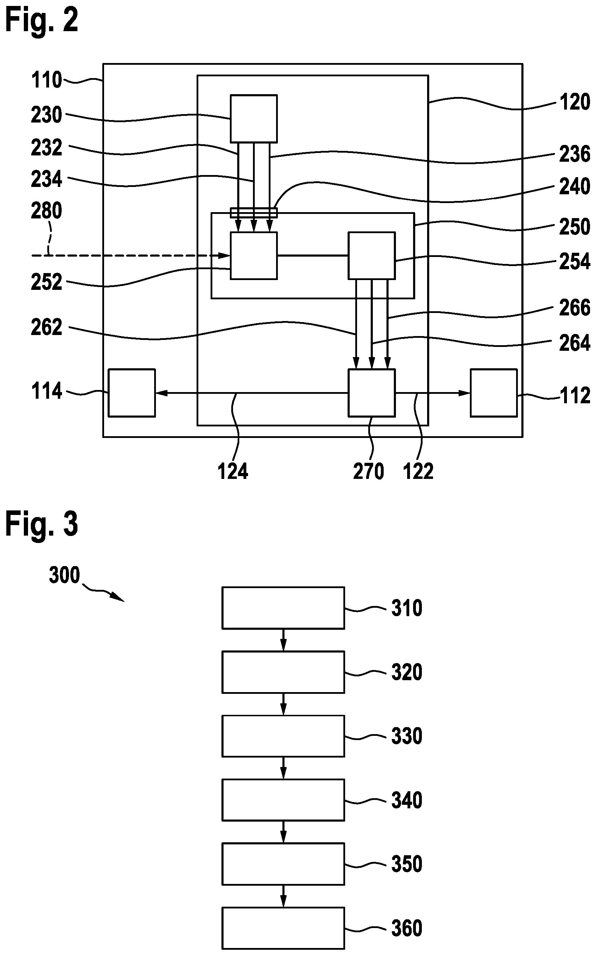

**Fig. 2** zeigt eine schematische Darstellung eines Steuersystems 120 zum Steuern eines Feststellbremssystems 110 gemäß einem Ausführungsbeispiel. Das Steuersystem 120 entspricht oder ähnelt hierbei dem Steuersystem aus Fig. 1. Das Feststellbremssystem 110 entspricht oder ähnelt dem Feststellbremssystem aus Fig. 1. Das in Fig. 2 dargestellte Feststellbremssystem 110 weist somit das Steuersystem 120, die beispielhaft lediglich eine Zugfahrzeug-Feststellbremse 112 und die beispielhaft lediglich eine Anhänger-Betriebsbremse 114 auf.

Das Steuersystem 120 ist ausgebildet, um das Feststellbremssystem 110 zu steuern. Dabei weist das Steuersystem 120 gemäß dem in Fig. 2 dargestellten Ausführungsbeispiel eine Bedieneinrichtung 230, eine Eingangsschnittstelle 240, ein Steuergerät 250 und eine Ventilbaugruppe 270 auf. Das Steuergerät 250 weist eine Einleseeinrichtung 252 und eine Bereitstelleinrichtung 254 auf.

Die Bedieneinrichtung 230 ist ausgebildet, um ein Bedienen des Feststellbremssystems durch einen Führer des Fahrzeugs zu ermöglichen. Dabei kann die Bedieneinrichtung 230 beispielsweise einen Hebel, der in mehrere Schaltstellungen gebracht werden kann, und/oder eine Mehrzahl von Bedienelementen aufweisen, wie beispielsweise Tasten, Felder oder dergleichen. Die Bedieneinrichtung 230 und das Steuergerät 250 sind über die Eingangsschnittstelle 240 signalübertragungsfähig miteinander verbunden. Die Eingangsschnittstelle 240 ist beispielhaft als ein Teil des Steuergerätes 250 ausgeführt. Alternativ kann die Eingangsschnittstelle 240 auch getrennt von dem Steuergerät 250 und/oder als ein Teil der Bedieneinrichtung 230 ausgeführt sein.

Das Steuergerät 250 ist ferner signalübertragungsfähig mit der Ventilbaugruppe 270 verbunden. Die Ventilbaugruppe 270 wiederum ist mittels Fluidleitungen mit der Zugfahrzeug-Feststellbremse 112 und der Anhänger-Betriebsbremse 114 verbunden. Somit ist das Steuergerät 250 über die Ventilbaugruppe 270 fluidisch bzw. fluidmechanisch mit der Zugfahrzeug-Feststellbremse 112 und der Anhänger-Betriebsbremse 114 verbunden. Die Ventilbaugruppe 270 ist beispielhaft getrennt von dem Steuergerät 250 ausgeführt. Alternativ kann die Ventilbaugruppe 270 auch als ein Teil des Steuergerätes 250 ausgeführt sein.

Die Einleseeinrichtung 252 des Steuergerätes 250 ist ausgebildet, um ein Feststellsignal 232 einzulesen. Ferner ist die Einleseeinrichtung 252 ausgebildet, um ein Anhängerfreigabesignal 234 einzulesen. Dabei ist die Einleseeinrichtung 252 gemäß dem in Fig. 2 dargestellten Ausführungsbeispiel ausgebildet, um das Feststellsignal 232 und das Anhängerfreigabesignal 234 von der Eingangsschnittstelle 240 bzw. über die Eingangsschnittstelle 240 von der Bedieneinrichtung 230 einzulesen. Hierbei ist die Bedieneinrichtung 230 ausgebildet, um ansprechend auf entsprechende Benutzereingaben das Feststellsignal 232 und das Anhängerfreigabesignal 234 auszugeben. Das Feststellsignal 232 repräsentiert eine erste Benutzereingabe, genauer gesagt eine erste Schaltstellung der Bedieneinrichtung 230. Anders ausgedrückt repräsentiert das Feststellsignal 232 eine benutzerseitige Anforderung eines mittels des Feststellbremssystems 110 gebremsten Zustands des gesamten Fahrzeuggespanns. Das Anhängerfreigabesignal 234 repräsentiert eine zweite Benutzereingabe, genauer gesagt eine zweite Schaltstellung der Bedieneinrichtung 230. Anders ausgedrückt repräsentiert das Anhängerfreigabesignal 234 eine benutzerseitige Anforderung eines ungebremsten Zustands des Anhängers des Fahrzeuggespanns bei mittels des Feststellbremssystems 110 gebremstem Zugfahrzeug.

Die Bereitstelleinrichtung 254 ist ausgebildet, um ansprechend auf das Feststellsignal 232 ein Betätigungssignal 262 bereitzustellen. Dabei ist die Bereitstelleinrichtung 254 ausgebildet, um das Betätigungssignal 262 an die Ventilbaugruppe 270 bereitzustellen. Das Betätigungssignal 262 ist geeignet, um bei einer Verwendung durch die Ventilbaugruppe 270 die Zugfahrzeug-Feststellbremse 112 und die Anhänger-Betriebsbremse 114 in einen betätigten Zustand zu versetzen.

Die Bereitstelleinrichtung 254 ist ferner ausgebildet, um ansprechend auf das Anhängerfreigabesignal 234 ein Lösesignal 264 bereitzustellen. Dabei ist die Bereitstelleinrichtung 254 ausgebildet, um das Lösesignal 264 an die Ventilbaugruppe 270 bereitzustellen. Das Lösesignal 264 ist geeignet, um bei einer Verwendung durch die Ventilbaugruppe 270 die Anhänger-Betriebsbremse 114 von dem betätigten Zustand in einen unbetätigten Zustand zu versetzen.

Ferner ist die Einleseeinrichtung 252 ausgebildet, um ein Anhängerrückstellsignal 236 einzulesen. Dabei ist die Einleseeinrichtung 252 ausgebildet, um das Anhängerrückstellsignal 236 von der Eingangsschnittstelle 240 bzw. über die Eingangsschnittstelle 240 von der Bedieneinrichtung 230 einzulesen. Hierbei ist die Bedieneinrichtung 230 ausgebildet, um ansprechend auf eine entsprechende Benutzereingabe das Anhängerrückstellsignal 236 auszugeben. Das Anhängerrückstellsignal 236 repräsentiert eine dritte Benutzereingabe, genauer gesagt ein erneutes Erreichen der zweiten Schaltstellung der Bedieneinrichtung 230. Anders ausgedrückt repräsentiert das Anhängerrückstellsignal 236 eine benutzerseitige Anforderung eines mittels des Feststellbremssystems 110 wieder gebremsten Zustands des Anhängers. Die Bereitstelleinrichtung 254 ist ausgebildet, um ansprechend auf das Anhängerrückstellsignal 236 ein Wiederbetätigungssignal 266 bereitzustellen. Dabei ist die Bereitstelleinrichtung 254 ausgebildet, um das Wiederbetätigungssignal 266 an die Ventilbaugruppe 270 bereitzustellen. Das Wiederbetätigungssignal 266 ist geeignet, um bei einer Verwendung durch die Ventilbaugruppe 270 die Anhänger-Betriebsbremse 114 von dem unbetätigten Zustand wieder in den betätigten Zustand zu versetzen.

Gemäß einem Ausführungsbeispiel ist die Bereitstelleinrichtung 254 optional zusätzlich ausgebildet, um das Wiederbetätigungssignal 266 ansprechend auf einen Ablauf einer vordefinierten Lösezeitdauer und/oder auf ein Anhängerrückstellsignal 236 bereitzustellen.

Gemäß unterschiedlicher Ausführungsbeispiele wird das Anhängerrückstellsignal 236 beispielsweise bei einem Ausschalten eines Antriebsmotors des Zugfahrzeugs, bei einem Ausschalten eines Fahrschalters des Zugfahrzeugs, bei einem Entfernen eines Zündschlüssels des Zugfahrzeugs, beispielsweise aus einem Zündschloss, bei einem Verlassen eines Fahrersitzes seitens eines Fahrers des Fahrzeuggespanns, bei einem erkannten Fehler in dem Feststellbremssystem 110 oder in einem Steuersystem 120 zum Steuern des Feststellbremssystems 110 und/oder bei einem Ausfall einer Spannungsversorgung des Fahrzeuggespanns bereitgestellt. Zum Bereitstellen des Anhängerrückstellsignals 236 kann dabei eine geeignete Sensorik verwendet werden, oder das Anhängerrückstellsignal 236 kann einem ohnehin bereits verfügbaren Signal entsprechen.

Gemäß einem Ausführungsbeispiel ist die Einleseeinrichtung 252 ausgebildet, um ein Auslösesignal 280 einzulesen. Hierbei ist die Bereitstelleinrichtung 254 zusätzlich oder alternativ ausgebildet, um das Lösesignal 264 und/oder das Wiederbetätigungssignal 266 ansprechend auf das Auslösesignal 280 bereitzustellen.

**Fig. 3** zeigt ein Ablaufdiagramm eines Verfahrens 300 zum Steuern gemäß einem Ausführungsbeispiel. Das Verfahren 300 zum Steuern ist ausführbar, um Feststellbremssystem für ein Fahrzeuggespann mit einem Zugfahrzeug und einem Anhänger zu steuern. Dabei ist das Verfahren 300 zum Steuern in Verbindung mit bzw. unter Verwendung von dem Steuergerät aus Fig. 2 oder einem ähnlichen Steuergerät und/oder dem Steuersystem aus Fig. 2 oder einem ähnlichen Steuersystem ausführbar.

In einem ersten Schritt 310 des Einlesens wird bei dem Verfahren 300 zum Steuern ein Feststellsignal eingelesen. Nachfolgend wird in einem ersten Schritt 320 des Bereitstellens ansprechend auf das eingelesene Feststellsignal ein Betätigungssignal an eine Ventilbaugruppe bereitgestellt, um eine Zugfahrzeug-Feststellbremse und eine Anhänger-Betriebsbremse in einen betätigten Zustand zu versetzen. In einem zweiten Schritt 330 des Einlesens wird ein Anhängerfreigabesignal eingelesen. Nachfolgend wird in einem zweiten Schritt 340 des Bereitstellens ansprechend auf das Anhängerfreigabesignal ein Lösesignal an die Ventilbaugruppe bereitgestellt, um die Anhänger-Betriebsbremse von dem betätigten Zustand in einen unbetätigten Zustand zu versetzen. Hierbei wird die Zugfahrzeug-Feststellbremse in dem betätigten Zustand belassen.

Ferner wird in einem dritten Schritt 350 des Einlesens ein Anhängerrückstellsignal eingelesen. Dabei wird das Anhängerrückstellsignal in dem dritten Schritt 350 des Einlesens von einer Eingangsschnittstelle zu einer Bedieneinrichtung zum Bedienen des Feststellbremssystems eingelesen. Ferner wird in einem dritten Schritt 360 des Bereitstellens ansprechend auf das Anhängerrückstellsignal ein Wiederbetätigungssignal an die Ventilbaugruppe bereitgestellt, um die Anhänger-Betriebsbremse von dem unbetätigten Zustand in den betätigten Zustand zu versetzen. Hierbei wird die ZugfahrzeugFeststellbremse in dem betätigten Zustand belassen. Optional zusätzlich wird in dem dritten Schritt 360 des Bereitstellens das Wiederbetätigungssignal ansprechend auf einen Ablauf einer vordefinierten Lösezeitdauer bereitgestellt.

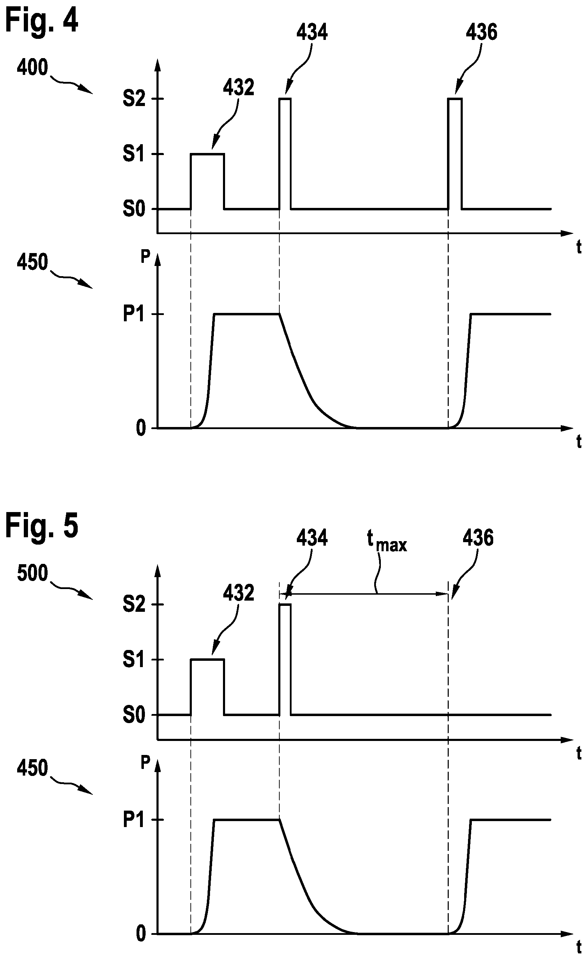

**Fig. 4** zeigt schematische Diagramme 400 und 450 zu Bedienung und Funktionsweise des Feststellbremssystems aus Fig. 1 bzw. Fig. 2. Gezeigt sind hierbei in Fig. 4 ein Schaltstellung-Zeit-Diagramm 400 und ein Anhängersteuerdruck-Zeit-Diagramm 450.

In dem Schaltstellung-Zeit-Diagramm 400 ist an der Abszissenachse die Zeit t aufgetragen und ist an der Ordinatenachse eine Schaltstellung der Bedieneinrichtung des Feststellbremssystems aufgetragen. Hierbei sind eine Neutralstellung S0, eine erste Schaltstellung S1 und eine zweite Schaltstellung S2 eingezeichnet. In dem Schaltstellung-Zeit-Diagramm 400 ist ein beispielhafter Ablauf einer Bedienung des Feststellbremssystems mittels der Bedieneinrichtung veranschaulicht. Hierbei liegt zunächst die Neutralstellung S0 vor. Zu einem ersten Zeitpunkt erfolgt ein Übergang in die erste Schaltstellung S1. In der ersten Schaltstellung S1 erfolgt eine Feststellsignal-Auslösung 432. Danach kommt es zu einer Rückkehr in die Neutralstellung S0. Zu einem zweiten Zeitpunkt erfolgt ein Übergang in die zweite Schaltstellung S2. In der zweiten Schaltstellung S2 erfolgt eine Anhängerfreigabesignal-Auslösung 434. Danach kommt es zu einer Rückkehr in die Neutralstellung S0. Zu einem dritten Zeitpunkt erfolgt ein erneuter Übergang in die zweite Schaltstellung S2. Bei erneutem Erreichen der zweiten Schaltstellung S2 erfolgt eine Anhängerrückstellsignal-Auslösung 436. Danach kommt es zu einer Rückkehr in die Neutralstellung S0.

In dem Anhängersteuerdruck-Zeit-Diagramm 450 ist an der Abszissenachse die Zeit t aufgetragen und ist an der Ordinatenachse ein an der Anhänger-Betriebsbremse des Feststellbremssystems anliegender Anhängersteuerdruck P bzw. ein durch das Anhänger-Steuersignal aus Fig. 1 bzw. Fig.2 bewirkter Druck aufgetragen. Hierbei ist zusätzlich zu einem Anhängersteuerdruck von 0 ein Bremsbetätigungsdruck P1 eingezeichnet. Der Bremsbetätigungsdruck P1 beträgt beispielsweise 8,5 bar oder dergleichen. Zu dem ersten Zeitpunkt steigt der Anhängersteuerdruck P von 0 auf den Bremsbetätigungsdruck P1 an und bleibt bis zu dem zweiten Zeitpunkt auf dem Niveau des Bremsbetätigungsdrucks P1. Zu dem zweiten Zeitpunkt fällt der Anhängersteuerdruck P von dem Bremsbetätigungsdruck P1 auf 0 ab. Zu dem dritten Zeitpunkt steigt der Anhängersteuerdruck P von 0 wieder auf den Bremsbetätigungsdruck P1 an.

Somit wird der Anhänger nach erneutem Erreichen der zweiten Schaltstellung S2 in den gebremsten Zustand zurückversetzt bzw. in Parkstellung oder Parkmodus versetzt.

**Fig. 5** zeigt schematische Diagramme 500 und 550 zu Bedienung und Funktionsweise des Feststellbremssystems aus Fig. 1 bzw. Fig. 2. Gezeigt sind hierbei in Fig. 5 ein Schaltstellung-Zeit-Diagramm 500 und ein Anhängersteuerdruck-Zeit-Diagramm 450. Dabei entspricht das Anhängersteuerdruck-Zeit-Diagramm 450 dem Anhängersteuerdruck-Zeit-Diagramm aus Fig. 4. Das Schaltstellung-Zeit-Diagramm 500 entspricht dem Schaltstellung-Zeit-Diagramm aus Fig. 4 mit Ausnahme dessen, dass zu dem dritten Zeitpunkt die Neutralstellung S0 beibehalten wird und die Anhängerrückstellsignal-Auslösung 436 ansprechend auf einen Ablauf einer vordefinierten Lösezeitdauer tₘₐₓ seit dem zweiten Zeitpunkt erfolgt.

Somit wird der Anhänger nach Ablauf der Lösezeitdauer tₘₐₓ bzw. einer Zeitkonstante, ggf. unter Betrachtung von Zusatzbedingungen aus Sicherheitsgründen, in den gebremsten Zustand zurückversetzt bzw. in Parkstellung oder Parkmodus versetzt.

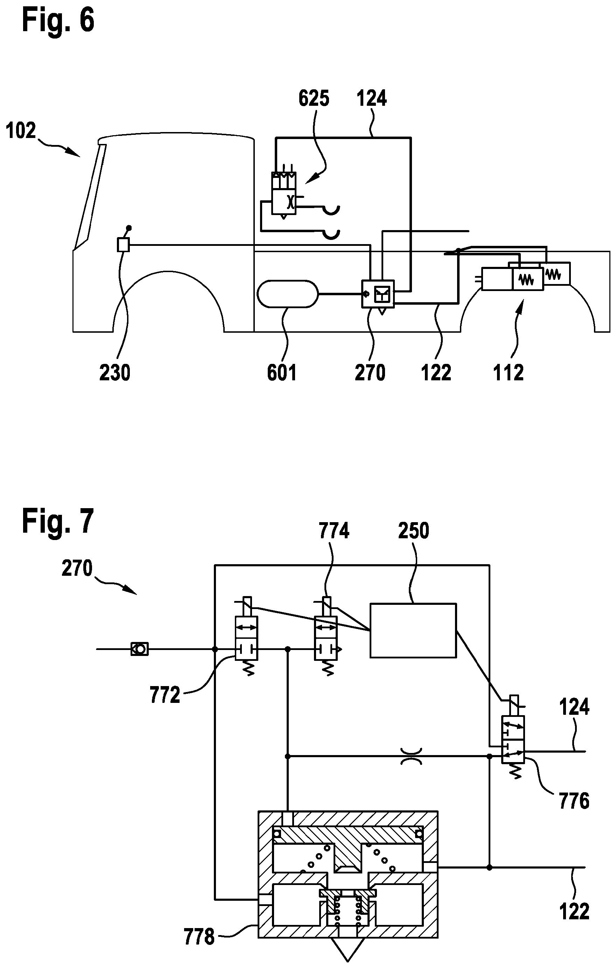

**Fig. 6** zeigt eine schematische Darstellung eines Zugfahrzeugs 102 eines Fahrzeuggespanns mit einem Steuersystem zum Steuern eines Feststellbremssystems gemäß einem Ausführungsbeispiel. Das Zugfahrzeug 102 entspricht oder ähnelt hierbei dem Zugfahrzeug aus Fig. 1. Ferner entspricht oder ähnelt das Steuersystem bzw. das Feststellbremssystem jenem aus Fig. 1 bzw. Fig. 2. Von dem Steuersystem und dem Feststellbremssystem sind in der Darstellung von Fig. 6 die Zugfahrzeug-Feststellbremse 112, die Bedieneinrichtung 230, die Ventilbaugruppe 270, ein Vorratsbehälter 601 für mit Druck beaufschlagtes Fluid und ein Anhängersteuermodul 625 gezeigt.

Die Bedieneinrichtung 230 ist signalübertragungsfähig mit der Ventilbaugruppe 270 verbunden. Der Vorratsbehälter 601 ist fluidmechanisch mit der Ventilbaugruppe 270 verbunden. Die Ventilbaugruppe 270 ist fluidmechanisch mit der Zugfahrzeug-Feststellbremse 112 verbunden, wobei das Zugfahrzeug-Steuersignal 122 übertragbar ist. Ferner ist die Ventilbaugruppe 270 fluidmechanisch mit dem Anhängersteuermodul 625 verbunden, wobei das Anhänger-Steuersignal 124 übertragbar ist. Das Anhängersteuermodul 625 repräsentiert eine Schnittstelle zu einem Anhänger des Fahrzeuggespanns und somit zu der Anhänger-Betriebsbremse.

Das Anhänger-Steuersignal 124, das von der Ventilbaugruppe 270 des Feststellbremssystems zur Anhängersteuerung generiert wird, wird an das Anhängersteuermodul 625 des Zugfahrzeugs 102 geleitet. Das Anhängersteuermodul 625 kann beispielsweise sowohl zum Feststellbremssystem als auch zu einem Betriebsbremssystem des Zugfahrzeugs 102 gezählt werden. Das Anhänger-Steuersignal 124 wird mittels des Anhängersteuermoduls 625 invertiert, z. B. in erster Näherung, und das invertierte Anhänger-Steuersignal 124 bzw. der invertierte Druck wird mit einem gegebenenfalls vorhandenen Betriebsbremsdruck des Zugfahrzeugs 102 mittels einer logischen ODER-Verknüpfung kombiniert, wobei dem höheren Druck der Vorzug gegeben wird, und der sich daraus ergebende Druck wird dann zur Anhänger-Betriebsbremse geschickt. Da diese Invertierung im Anhängersteuermodul 625 durchgeführt wird, kann auf einfache Weise die Anhänger-Betriebsbremse durch direktes Verbinden des Anhänger-Steuersignals 124 mit dem Zugfahrzeug-Steuersignal 122 der Zugfahrzeug-Feststellbremse 112 gleichsinnig mit dieser betätigt werden und durch Verbinden mit dem Vorratsbehälter 601 die Anhänger-Betriebsbremse unabhängig von der Zugfahrzeug-Feststellbremse 112 gelöst werden, insbesondere falls nicht gleichzeitig eine Betriebsbremsung vorliegt.

**Fig. 7** zeigt eine schematische Darstellung eines Steuersystems zum Steuern eines Feststellbremssystems gemäß einem Ausführungsbeispiel. Hierbei entspricht oder ähnelt das Steuersystem jenem aus Fig. 1, Fig. 2 bzw. Fig. 6. Von dem Steuersystem sind in der Darstellung von Fig. 7 das Steuergerät 250 und die Ventilbaugruppe 270 gezeigt. Die Ventilbaugruppe 270 weist gemäß dem hier dargestellten Ausführungsbeispiel ein erstes Magnetventil 772, ein zweites Magnetventil 774 und ein drittes Magnetventil 776 bzw. ein Steuerventil 776 sowie ein Relaisventil 778 auf.

Das Relaisventil 778 ist fluidmechanisch über ein Rückschlagventil sowie das erste Magnetventil 772 und das zweite Magnetventil mit dem Vorratsbehälter aus Fig. 6 verbunden. Ferner ist das Relaisventil 778 zur Ausgabe des Zugfahrzeug-Steuersignals 122 fluidmechanisch mit der Zugfahrzeug-Feststellbremse verbunden. Zudem ist das Relaisventil 778 über das Steuerventil 776 fluidmechanisch mit dem Anhängersteuermodul aus Fig. 6 und somit der Anhänger-Betriebsbremse verbunden. Das Steuerventil 776 ist ausgebildet, um in einer ersten Ventilstellung eine gleichsinnige und in einer zweiten Ventilstellung eine gegensinnige Ansteuerung der Zugfahrzeug-Feststellbremse und der Anhänger-Betriebsbremse zu bewirken. Gemäß dem in Fig. 7 dargestellten Ausführungsbeispiel ist das Steuerventil 776 als ein 3/2-Wegeventil ausgeführt.

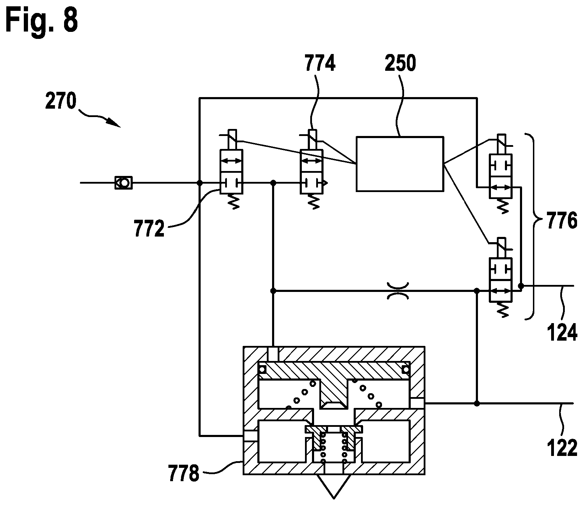

**Fig. 8** zeigt eine schematische Darstellung eines Steuersystems zum Steuern eines Feststellbremssystems gemäß einem Ausführungsbeispiel. Dabei entspricht das Steuersystem dem Steuersystem aus Fig. 7 mit Ausnahme dessen, dass anstelle eines Steuerventils zwei Steuerventile 776 vorgesehen sind. Gemäß dem in Fig. 8 dargestellten Ausführungsbeispiel sind die Steuerventile 776 als 2/2-Wegeventile ausgeführt.

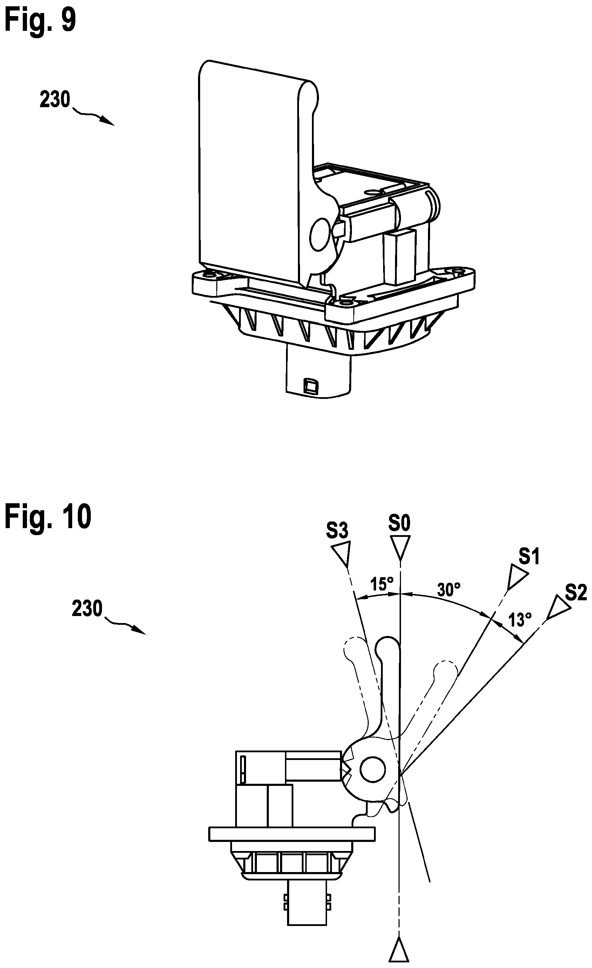

**Fig. 9** zeigt eine perspektivische Darstellung einer Bedieneinrichtung 230 eines Steuersystems zum Steuern eines Feststellbremssystems gemäß einem Ausführungsbeispiel. Hierbei entspricht oder ähnelt die Bedieneinrichtung 230 der Bedieneinrichtung aus Fig. 2 bzw. Fig. 6. Die Bedieneinrichtung 230 ist in der Darstellung von Fig. 9 in der Neutralstellung bzw. einer Ruhestellung gezeigt. Die Bedieneinrichtung 230 weist einen durch einen Nutzer betätigbaren Hebel auf. Hierbei ist der Hebel als ein Kipphebel ausgeführt.

**Fig. 10** zeigt eine Seitenansicht der Bedieneinrichtung 230 aus Fig. 9. Dabei ist die Bedieneinrichtung 230 in Verbindung mit den in Fig. 4 bzw. Fig. 5 dargestellten Schaltstellungen gezeigt. Die Neutralstellung S0 entspricht hierbei einer Ruhestellung bzw. stabilen Stellung der Bedieneinrichtung 230. Durch Kippen des Hebels der Bedieneinrichtung 230 beispielsweise um 30 Grad in eine erste Richtung ist die erste Schaltstellung S1 erreichbar. Durch Kippen des Hebels beispielsweise um weitere 13 Grad über die erste Schaltstellung S1 hinaus ist die zweite Schaltstellung S2 erreichbar. Durch Kippen des Hebels beispielsweise um 15 Grad in eine zweite Richtung ist eine dritte Schaltstellung S3 erreichbar, die eine angeforderte Deaktivierung bzw. ein angefordertes Lösen des Feststellbremssystems repräsentiert.

Unter Bezugnahme auf die vorstehend beschriebenen Figuren werden nachfolgend Ausführungsbeispiele nochmals zusammenfassend und mit anderen Worten kurz erläutert.

Bei einem Fahrzeuggespann 100 aus Zugfahrzeug 102 in Gestalt eines Lastkraftwagens und Anhänger 104 ist eine Feststellbremse des Anhängers 104 vom Zugfahrzeug 102 aus nicht ansprechbar. Das Steuersystem 120 des Feststellbremssystems 110 steuert über das Anhängersteuermodul 625 (TCM = Trailer Control Modul bzw. ASM = Anhängersteuermodul) des Zugfahrzeugs 102 die Anhänger-Betriebsbremse 114 des Anhängers 104 an. Dazu ist ein Anschuss des Anhängersteuermoduls 625 mit einem Ausgang des Steuersystems 120 verbunden. Wird diese Leitung von dem Steuersystem 120 entlüftet, wird die Bremsleitung zum Anhänger 104 im gegensinnigen Maße belüftet und die Anhänger-Betriebsbremse 114 bremst entsprechend mit.

Wenn nun die Zugfahrzeug-Feststellbremse 112 in Form von Federspeichern - meist an einer Hinterachse - nur teilweise, also nicht voll betätigt wird, sollte der Anhänger 104 in etwa dem gleichen Maß mitgebremst werden. Das ist notwendig, da das Feststellbremssystem 110 auch während der Fahrt als Hilfsbremse benutzt werden kann, falls die Betriebsbremse ausgefallen sein sollte. Da die Federspeicher im Zugfahrzeug 102 genau wie der Anschluss des Anhängersteuermoduls 625 durch Entlüften wirksam werden, muss der gleiche Druck auch zum Anhängersteuermodul 625 geschaltet werden, damit der Anhänger 104 entsprechend mitgebremst wird.

Im Stillstand, wenn die Parkbremse voll eingelegt wird, ist das nicht mehr nötig. Darum kann es für diese Betriebsart zwei Varianten geben, nämlich die skandinavische Version, bei der der Anhänger 104 nicht mehr mitgebremst wird, und die kontinentale Version, bei der er weiterhin mitgebremst wird. Da dieses Mitbremsen mit der Anhänger-Betriebsbremse 114 geschieht und diese nach Ausschalten des Motors irgendwann keine Luft mehr hat und öffnet, soll sich der Fahrer davon überzeugen können, dass sein Lastzug bzw. Fahrzeuggespann 100 auch ohne Mithilfe der Anhänger-Betriebsbremse 114 nicht wegrollt. Dafür ist eine Teststellung, die zweite Schaltstellung S2, vorgesehen, bei der die Leitung zum Anhängersteuermodul 625 kurzzeitig belüftet wird, wodurch die Anhänger-Betriebsbremse 114 gelöst wird. In der skandinavischen Variante ist das unnötig, denn der Anhänger bremst ohnehin nicht mit.

Das Feststellbremssystem 110 bzw. die elektrische Parkbremse (EPB) weist die Bedieneinrichtung 230 bzw. ein Bedienteil (HCU = Hand Control Unit) ein EPB-Modul aus Steuergerät 250 und Ventilbaugruppe 270 auf.

Die Bedieneinrichtung 230 besteht aus einer Art Hebel bzw. Kippschalter als Schnittstelle zum Fahrer und einer Auswerteelektronik, welche die Stellung des Hebels detektiert und als digitales Signal (Feststellsignal 232, Anhängerfreigabesignal 234 oder Anhängerrückstellsignal 236) an das Steuergerät 250 weiterleitet. Der Hebel befindet sich unbetätigt in einer Grundstellung bzw. Neutralstellung S0. Wenn der Fahrer den Hebel in eine Richtung betätigt, wird im ersten, stufbaren Bereich zwischen der Neutralstellung S0 und der ersten Schaltstellung S1 eine Teilbremsung ausgeführt. Lässt der Fahrer den Hebel wieder los bzw. bewegt er ihn zurück, wird die Feststellbremse wieder gelöst bzw. die Bremswirkung reduziert. Auch bei Abschalten oder Ausfall der Stromversorgung soll sich in diesem Betriebsmodus die Feststellbremse lösen.

Betätigt der Fahrer den Hebel weiter - z. B. über einen ersten Rastpunkt hinaus - bis in die zweite Schaltstellung S2 und steht das Fahrzeuggespann 100, so wird der Federspeicher voll entlüftet und das Steuersystem 120 schaltet in die stabile Parkstellung, in der auch nach Loslassen des Hebels und/oder nach Abschalten oder Ausfall der Stromversorgung die Parkbremse eingelegt bleibt bzw. das Zugfahrzeug 102 und der Anhänger 104 gebremst bleiben. Wenn die skandinavische Version vorliegt, ist die Leitung zum Anhängersteuermodul 625 in diesem Zustand belüftet, in der kontinentalen Version hingegen entlüftet. Betätigt der Fahrer den Hebel weiter in diese Richtung über einen Rastpunkt bzw. einen weiteren Rastpunkt hinaus in die zweite Schaltstellung S2, wird bei der nicht-skandinavischen Variante die Testfunktion aktiviert.

Ist das Feststellbremssystem 110 einmal in der stabilen Parkstellung, so kann der Fahrer die Bremsen lösen, indem er den Hebel in der anderen Richtung in die dritte Schaltstellung S3 bewegt und gleichzeitig das Bremspedal betätigt. Dies ist eine Sicherheitsmaßnahme, um zu verhindern, dass das Feststellbremssystem 110 gelöst wird, weil der Hebel der Bedieneinrichtung 230 aus Versehen bewegt wurde.

Das EPB-Modul aus Steuergerät 250 und Ventilbaugruppe 270 ist ausgebildet, um bei Ausfall der Stromversorgung im ungeparkten Zustand in Fahrstellung zu bleiben, d. h. die Federspeicher und die Leitung zum Anhänger belüftet bleiben und in Parkstellung die Federspeicher entlüftet sind. Der Zustand der Leitung zum Anhängersteuermodul 625 kann in Parkstellung nun belüftet oder entlüftet sein, je nachdem, ob es sich um eine skandinavische Variante handelt oder nicht.

Das EPB-Modul aus Steuergerät 250 und Ventilbaugruppe 270enthält das Steuergerät 250, die Magnetventile 272, 274 und 276, einen Drucksensor und mechanische Teile, insbesondere das Relaisventil 278. Mit dem ersten Magnetventil 272 und dem zweiten Magnetventil 274 und dem Drucksensor wird der ausgesteuerte Druck geregelt, mit dem Steuerventil 276, hier einem 3/2-Wege-Magnetventil oder zwei 2/2-Wege-Magnetventilen, wird gesteuert, ob zum Anhängersteuermodul 625 der gleiche Druck geschickt wird, wie zu den Federspeichern - also der Anhänger 104 im Falle einer Bremsung mitbremst, oder ob die Leitung zum Anhängersteuermodul 625 mit dem Vorrat bzw. Vorratsbehälter 601 verbunden wird - der Anhänger 104 also ungebremst bleibt.

Auch wenn gewöhnliche Magnetventile unbestromt entweder die eine oder die andere Schaltposition einnehmen können, aber nicht einmal die eine und ein anderes Mal die andere, können gemäß Ausführungsbeispielen die beiden Varianten von EPB-Modulen realisiert werden, ohne dass bei der einen Variante die eine Sorte von Magnetventilen und bei der anderen Variante die andere Sorte von Magnetventilen verbaut zu werden braucht, was Varianten in den Gehäusen der EPB-Module zur Folge hätte.

Gemäß Ausführungsbeispielen kann mit nur einer Variante des EPB-Moduls ausgekommen werden. Beispielsweise wird in skandinavischen Ländern die genannte Anhängerprüffunktion nicht verwendet. Gemäß einem Ausführungsbeispiel wird die ansonsten für die Anhängerprüffunktion verwendete Schaltstellung, hier die zweite Schaltstellung S2, stattdessen verwendet, um die Anhänger-Betriebsbremse 114 bzw. Betriebsbremse 114 des Anhängers 104 im geparkten Zustand unter Verwendung einer geänderten Softwarefunktion drucklos zu machen. Alternativ können auch andere Signale einer externen Signalquelle, wie das Auslösesignal 280, dies bewirken. Dieser ungebremste Zustand des Anhängers 104 kann nach erneuter Betätigung der Bedieneinrichtung 230 und optional zusätzlich zeitgesteuert nach Ablauf der vordefinierten Lösezeitdauer tₘₐₓ beendet werden. Der Anhänger 104 ist dann beispielsweise wieder mittels der AnhängerBetriebsbremse 114 bzw. Betriebsbremse gebremst. Der ungebremste Zustand des Anhängers 104 kann auch nach einem Wechsel der Parkbremse in eine Fahrstellung beendet werden.

### BEZUGSZEICHENLISTE

- 100: Fahrzeuggespann
- 102: Zugfahrzeug
- 104: Anhänger
- 110: Feststellbremssystem
- 112: Zugfahrzeug-Feststellbremse
- 114: Anhänger-Betriebsbremse
- 120: Steuersystem
- 122: Zugfahrzeug-Steuersignal
- 124: Anhänger-Steuersignal
- 230: Bedieneinrichtung
- 232: Feststellsignal
- 234: Anhängerfreigabesignal
- 236: Anhängerrückstellsignal
- 240: Eingangsschnittstelle
- 250: Steuergerät
- 252: Einleseeinrichtung
- 254: Bereitstelleinrichtung
- 262: Betätigungssignal
- 264: Lösesignal
- 266: Wiederbetätigungssignal
- 270: Ventilbaugruppe
- 280: Auslösesignal
- 300: Verfahren zum Steuern
- 310: Schritt des Einlesens
- 320: Schritt des Bereitstellens
- 330: Schritt des Einlesens
- 340: Schritt des Bereitstellens
- 350: Schritt des Einlesens
- 360: Schritt des Bereitstellens
- 400: Schaltstellung-Zeit-Diagramm
- 432: Feststellsignal-Auslösung
- 434: Anhängerfreigabesignal-Auslösung
- 436: Anhängerrückstellsignal-Auslösung
- S0: Neutralstellung
- S1: erste Schaltstellung
- S2: zweite Schaltstellung
- t: Zeit
- 450: Anhängersteuerdruck-Zeit-Diagramm
- P: Anhängersteuerdruck
- P1: Bremsbetätigungsdruck bzw. betätigter Zustand der Anhänger-Betriebsbremse
- 500: Schaltstellung-Zeit-Diagramm
- tₘₐₓ: vordefinierte Lösezeitdauer
- 601: Vorratsbehälter
- 625: Anhängersteuermodul
- 772: erstes Magnetventil
- 774: zweites Magnetventil
- 776: drittes Magnetventil bzw. Steuerventil
- 778: Relaisventil
- S3: dritte Schaltstellung

## Patentansprüche

1. Verfahren (300) zum Steuern eines Feststellbremssystems (110) für ein Fahrzeuggespann (100) mit einem Zugfahrzeug (102) und einem Anhänger (104), wobei das Verfahren (300) folgende Schritte aufweist:
Einlesen (310) eines Feststellsignals (232), wobei das Feststellsignal (232) von einer Eingangsschnittstelle (240) zu einer Bedieneinrichtung (230) zum Bedienen des Feststellbremssystems (110) eingelesen wird;
Bereitstellen (320) eines Betätigungssignals (262) ansprechend auf das Feststellsignal (232) an eine Ventilbaugruppe (270), um eine Zugfahrzeug-Feststellbremse (112) und eine Anhänger-Betriebsbremse (114) in einen betätigten Zustand zu versetzen;
Einlesen (330) eines Anhängerfreigabesignals (234), wobei das Anhängerfreigabesignal (234) von der Eingangsschnittstelle (240) eingelesen wird;
Bereitstellen (340) eines Lösesignals (264) ansprechend auf das Anhängerfreigabesignal (234) an die Ventilbaugruppe (270), um die Anhänger-Betriebsbremse (114) von dem betätigten Zustand in einen unbetätigten Zustand zu versetzen, wobei die Zugfahrzeug-Feststellbremse (112) in dem betätigten Zustand belassen wird;
Einlesen (350) eines Anhängerrückstellsignals (236), wobei das Anhängerrückstellsignal (236) von der Eingangsschnittstelle (240) eingelesen wird; und
Bereitstellen (360) eines Wiederbetätigungssignals (266) ansprechend auf das Anhängerrückstellsignal (236) an die Ventilbaugruppe (270), um die Anhänger-Betriebsbremse (114) von dem unbetätigten Zustand in den betätigten Zustand zu versetzen, wobei die Zugfahrzeug-Feststellbremse (112) in dem betätigten Zustand belassen wird,
wobei das Feststellsignal (232) eine erste Schaltstellung (S1) der Bedieneinrichtung (230) repräsentiert und das Anhängerfreigabesignal (234) eine zweite Schaltstellung (S2) der Bedieneinrichtung (230) repräsentiert, wobei das Anhängerrückstellsignal (236) ein erneutes Erreichen der zweiten Schaltstellung (S2) der Bedieneinrichtung (230) repräsentiert.

2. Verfahren (300) gemäß Anspruch 1, wobei im Schritt (360) des Bereitstellens des Wiederbetätigungssignals (266) das Wiederbetätigungssignal (266) ansprechend auf einen Ablauf einer vordefinierten Lösezeitdauer (tmax) an die Ventilbaugruppe (270) bereitgestellt wird.

3. Verfahren (300) gemäß einem der vorangegangenen Ansprüche, wobei das Anhängerrückstellsignal (236) ein Ausschalten eines Antriebsmotors oder eines Fahrschalters des Zugfahrzeugs (102), ein Entfernen eines Zündschlüssels des Zugfahrzeugs (102), ein Verlassen eines Fahrersitzes seitens eines Fahrers des Fahrzeuggespanns (100), einen erkannten Fehler in dem Feststellbremssystem (110) oder in einem Steuersystem (120) zum Steuern des Feststellbremssystems (110) und/oder einen Ausfall einer Spannungsversorgung des Fahrzeuggespanns (100) repräsentiert.

4. Steuergerät (250), das eingerichtet ist, um die Schritte des Verfahrens (300) gemäß einem der vorangegangenen Ansprüche in entsprechenden Einheiten (252, 254) auszuführen und/oder anzusteuern.

5. Steuersystem (120) zum Steuern eines Feststellbremssystems (110) für ein Fahrzeuggespann (100) mit einem Zugfahrzeug (102) und einem Anhänger (104), wobei das Steuersystem (120) folgende Merkmale aufweist:
eine Bedieneinrichtung (230) zum Bedienen des Feststellbremssystems (110);
ein Steuergerät (250) gemäß Anspruch 4, wobei das Steuergerät (250) über eine Eingangsschnittstelle (240) signalübertragungsfähig mit der Bedieneinrichtung (230) verbunden ist; und
eine Ventilbaugruppe (270) zum Ansteuern einer Zugfahrzeug-Feststellbremse (112) und einer Anhänger-Betriebsbremse (114) des Feststellbremssystems (110), wobei das Steuergerät (250) signalübertragungsfähig mit der Ventilbaugruppe (270) verbunden ist.

6. Steuersystem (120) gemäß Anspruch 5, wobei die Ventilbaugruppe (270) eine Mehrzahl von Magnetventilen (772, 774, 776) und ein Relaisventil (778) aufweist, wobei die Mehrzahl von Magnetventilen (772, 774, 776) zumindest ein Steuerventil (776) aufweist, das ausgebildet ist, um je nach Ventilstellung die Zugfahrzeug-Feststellbremse (112) und die Anhänger-Betriebsbremse (114) bezüglich einander gleichsinnig oder gegensinnig anzusteuern.

7. Steuersystem (120) gemäß Anspruch 6, wobei das Steuerventil (776) ein 3/2-Wegeventil oder zwei 2/2-Wegeventile aufweist.

8. Computerprogramm, das dazu eingerichtet ist, das Verfahren (300) gemäß einem der Ansprüche 1 bis 3 auszuführen und/oder anzusteuern.

9. Maschinenlesbares Speichermedium, auf dem das Computerprogramm nach Anspruch 8 gespeichert ist.

## Claims

1. A method (300) for controlling a parking brake system (110) for a vehicle combination (100) comprising a tractor vehicle (102) and a trailer (104), the method (300) comprising the following steps:
- the inputting (310) of a parking signal (232), this parking signal (232) being input into an operating device (230) by an input interface (240) in order to operate the parking brake system (110);
- the provision (320) of an actuating signal (262) at a valve assembly (270) in response to the parking signal (232) in order to switch a tractor-vehicle parking brake (112) and a trailer service brake (114) to an actuated state;
- the inputting (330) of a trailer release signal (234), this trailer release signal (234) being input by the input interface (240);
- the provision (340) of a release signal (264) at the valve assembly (270) in response to the trailer release signal (234) in order to switch the trailer service brake (114) from the actuated state to an non-actuated state, the tractor-vehicle parking brake (112) being left in the actuated state;
- the inputting (350) of a trailer reset signal (236), the trailer reset signal (236) being input by the input interface (240); and
- the provision (360) of a re-actuating signal (266) at the valve assembly (270) in response to the trailer reset signal (236) in order to switch the trailer service brake (114) from the non-actuated state into the actuated state, the tractor-vehicle parking brake (112) being left in the actuated state,
the parking signal (232) representing a first switching position (S1) of the operating device (230) and the trailer release signal (234) representing a second switching position (S2) of the operating device (230), the trailer reset signal (236) representing the return of the operating device (230) to the second switching position (S2).

2. A method (300) according to claim 1, at step (360) of the provision of the re-actuating signal (266) this re-actuating signal (266) being provided at the valve assembly (270) in response to the expiry of a pre-determined release period (tmax).

3. A method (300) according to any one of the preceding claims, the trailer reset signal (236) representing the switching off of a drive motor or a driving switch of the tractor vehicle (102), the removal of an ignition key of the tractor vehicle (102), the leaving of a driver's seat by the driver of the vehicle combination, an identified fault in the parking brake system (110) or in a control system (120) for controlling the parking brake system (110) and/or a failure of a power supply to the vehicle combination (100).

4. A control device (250) that is configured to execute and/or to trigger the steps of the method (300) according to any one of the preceding claims in appropriate units (252, 254).

5. A control system (120) for controlling a parking brake system (110) for a vehicle combination (100) comprising a tractor vehicle (102) and a trailer (104), the control system (120) having the following characteristics:
- an operating device (230) for operating the parking brake system (110);
- a control device (250) according to claim 4, this control device (250) being connected to the operating device (230) via an input interface (240) such that it is able to transmit signals; and
- a valve assembly (27) for triggering a tractor-vehicle parking brake (112) and a trailer service brake (114) of the parking brake system (110), the control device (250) being connected to the valve assembly (27) such that it is able to transmit signals.

6. A control system (120) according to claim 5, the valve assembly (270) comprising a plurality of solenoid valves (772, 774, 776) and a relay valve (778), this plurality of solenoid valves (772, 774, 776) including at least one control valve (776) that is designed to trigger the tractor-vehicle parking brake (112) and the trailer service brake (114) in either the same or different directions to one another depending on the valve position.

7. A control system (120) according to claim 6, the control valve (776) having a 3/2-way valve or two 2/2-way valves.

8. A computer program that is designed to execute and/or to trigger the method (300) according to any one of claims 1 to 7.

9. A machine-readable storage medium on which the computer program according to claim 8 is stored.

## Revendications

1. Procédé (300) de commande d'un système (110) de frein de stationnement d'un train (100) de véhicules comprenant un véhicule (102) tracteur et une remorque (104), dans lequel le procédé (300) a les stades suivants :
lecture (310) d'un signal (232) de stationnement, dans lequel on lit le signal (232) de stationnement par une interface (240) d'entrée d'un dispositif (230) de commande pour la commande du système (110) de frein de stationnement ;
mise à disposition (320) d'un signal (262) d'actionnement correspondant au signal (232) de stationnement sur un module (270) de vanne, afin de mettre un frein (112) de stationnement du véhicule tracteur et un frein (114) de fonctionnement de la remorque dans un état actionné ;
lecture (330) d'un signal (234) de validation, dans lequel on lit le signal (234) de validation de remorque par l'interface (240) d'entrée ;
mise à disposition (340) d'un signal (264) d'annulation en réaction au signal (234) de validation de remorque sur le module (270) de vanne, afin de faire passer le frein (114) de fonctionnement de la remorque de l'état actionné à un état non actionné, dans lequel on laisse le frein (112) de stationnement du véhicule de traction dans l'état actionné ;
lecture (350) d'un signal (236) de retour à l'état initial de remorque, dans lequel on lit le signal (236) de remise à l'état initial de remorque par l'interface (240) d'entrée ; et
mise à disposition (360) d'un signal (266) de réactionnement en réaction au signal (236) de remise à l'état initial de remorque sur le module (270) de vanne, pour faire passer le frein (114) de fonctionnement de remorque de l'état non actionné à l'état actionné, dans lequel on laisse le frein (112) de stationnement du véhicule tracteur dans l'état actionné,
dans lequel le signal (232) de stationnement représente une première position (S1) de commutation du dispositif (230) de commande et le signal (234) de validation de remorque représente une deuxième position (S2) de commutation du dispositif (230) de commande, dans lequel le signal (236) de remise à l'état initial de remorque représente que l'on a atteint à nouveau la deuxième position (S2) de commutation du dispositif (230) de commande.

2. Procédé (300) suivant la revendication 1, dans lequel, dans le stade (360) de la mise à disposition du signal (266) de réactionnement, on met à disposition le signal (266) de réactionnement en réaction au déroulement d'une durée (tmax) d'annulation définie à l'avance sur le module (270) de vanne.

3. Procédé (300) suivant l'une des revendications précédentes, dans lequel le signal (236) de remise à l'état initial de remorque représente une mise hors circuit d'un moteur d'entraînement ou une ouverture d'un interrupteur de marche du véhicule (102) tracteur, un retrait d'une clé d'allumage du véhicule (102) tracteur, qu'un conducteur de train (100) de véhicules quitte son siège, une détection d'un défaut du système (110) de frein de stationnement ou d'un système (120) de commande du système (110) de frein de stationnement et/ou une défaillance d'une alimentation de tension du train (100) de véhicules.

4. Appareil (250) de commande, qui est conçu pour exécuter et/ou commander les stades du procédé (300) suivant l'une des revendications précédentes dans des unités (252, 254) correspondantes.

5. Système (120) de commande d'un système (110) de frein de stationnement d'un train (100) de véhicules ayant un véhicule (102) tracteur et une remorque (104), dans lequel le système (120) de commande a les caractéristiques suivantes :
un appareil (230) de commande pour la commande du système (110) de frein de stationnement ;
un appareil (250) de commande suivant la revendication 4, dans lequel l'appareil (250) de commande communique avec le dispositif (230) de commande, de manière à pouvoir transmettre des signaux par l'intermédiaire d'une interface (240) d'entrée ; et
un module (270) de soupape pour la commande d'un frein (112) de stationnement du véhicule tracteur et d'un frein (114) de fonctionnement de la remorque du système (110) de frein de stationnement, dans lequel l'appareil (250) de commande communique avec le module (270) de vanne en étant apte à transmettre des signaux.

6. Système (120) de commande suivant la revendication 5, dans lequel le module (270) de vanne a une pluralité d'électrovannes (772, 774, 776) et une vanne (778) relais, dans lequel la pluralité d'électrovannes (772, 774, 776) a au moins une vanne (776) pilote, qui est constituée pour commander, suivant la position de la vanne, le frein (112) de stationnement du véhicule tracteur et le frein (114) de fonctionnement de la remorque dans le même sens ou dans le sens contraire l'un par rapport à l'autre.

7. Système (120) de commande suivant la revendication 6, dans lequel la vanne (776) de commande est une vanne à 3/2 voies ou deux vannes à 2/2 voies.

8. Programme d'ordinateur qui, lorsqu'il est exécuté sur un ordinateur ou une installation, réalise et/ou exécute le procédé (300) suivant l'une des revendications 1 à 3.

9. Support de mémoire, déchiffrable par ordinateur, sur lequel le programme d'ordinateur de la revendication 8 est mis en mémoire.
